# FASCICULE DE BREVET EUROPEEN

(11) **EP 3 923 104 B1**
(45) Date de publication et mention de la délivrance du brevet: **17.05.2023**
(21) Numéro de dépôt: 21177129.0
(22) Date de dépôt: 01.06.2021
(51) Int. Cl.: G05B 23/02, B64F 5/60, G06N 3/08

(54) **PROCÉDÉ ET SYSTÈME DE CONTRÔLE D'UN NIVEAU D'ENDOMMAGEMENT D'AU MOINS UNE PIÈCE D'AÉRONEF, AÉRONEF ASSOCIÉ**
VERFAHREN UND SYSTEM ZUR ÜBERWACHUNG EINES BESCHÄDIGUNGSGRADES VON MINDESTENS EINEM FLUGZEUGTEIL SOWIE ENTSPRECHENDES FLUGZEUG
METHOD AND SYSTEM FOR CONTROLLING A DAMAGE LEVEL OF AT LEAST ONE PART OF AN AIRCRAFT, ASSOCIATED AIRCRAFT

(30) Priorité: 08.06.2020 FR 2005954
(43) Date de publication de la demande: 15.12.2021
(73) Titulaire: Airbus Helicopters, 13725 Marignane Cedex (FR)
(72) Inventeur: CERQUEIRA, Stéphane, 13090 AIX EN PROVENCE (FR); JOUVE, Jérémy, 13560 SENAS (FR); MOREL, Hervé, 13100 AIX EN PROVENCE (FR)
(74) Mandataire: GPI Brevets

(56) Documents cités:
- FR-A1- 3 006 785
- FR-A1- 3 028 331
- US-A1- 2008 091 630

## Description

La présente invention concerne le domaine du contrôle et de la surveillance du niveau d'endommagement ou d'usure des pièces constituant un aéronef et par exemple des pièces devant être régulièrement remplacées.

Plus particulièrement, l'invention se rapporte à un procédé particulier de contrôle d'un niveau d'endommagement d'au moins une pièce d'aéronef, à un système de contrôle permettant de contrôler ce niveau d'endommagement et à un aéronef équipé d'un tel système de contrôle.

De manière générale, les systèmes de contrôle d'un niveau d'endommagement de pièces d'aéronef mesurent le temps d'utilisation ou de vol de chacune des pièces d'un aéronef. Lorsque le temps d'utilisation d'une pièce particulière a atteint une valeur de seuil prédéterminée, ces systèmes de contrôle permettent alors de commander une opération de maintenance pour procéder au remplacement de cette pièce.

Cependant, l'utilisation réelle de chaque aéronef peut être différente d'un aéronef à l'autre. Un aéronef peut solliciter mécaniquement les pièces le constituant beaucoup plus rapidement qu'un autre aéronef dont l'utilisation génère moins de contraintes mécaniques. Pour des questions de sûreté, les systèmes de contrôle doivent alors être configurés pour répondre aux utilisations les plus sévères d'un aéronef, quelle que soit l'utilisation réelle qui en sera faite.

Dés lors, pour certains aéronefs très sollicités mécaniquement, les opérations de maintenance peuvent être effectuées au bon moment. En revanche pour d'autres aéronefs moins sollicités, les opérations de maintenance pourront être effectuées trop régulièrement et peuvent donc engendrer des coûts de maintenance disproportionnés au regard de l'utilisation réelle qui est faite de l'aéronef. En effet, l'utilisation réelle d'un aéronef a une incidence directe sur le niveau d'endommagement réel des pièces le constituant. Un tel coût est d'autant plus important lorsqu'il s'agit de remplacer simultanément un ensemble de plusieurs pièces tel qu'un moteur de l'aéronef notamment.

Par la suite, le terme de « pièce » pourra donc indifféremment désigner une pièce seule de l'aéronef ou un ensemble de pièces liées ou non mécaniquement entre elles.

Par ailleurs, il est également connu de prédire la qualité d'un vol d'aéronef en utilisant un réseau de neurones. Une publication en langue anglaise et dénommée « A method for predicting aircraft flying qualities using neural networks » a notamment été divulguée par Wenqian Tan, Yu Wu, Xiangju Qu et A. V. Efremov lors d'une conférence internationale, « 2nd International Conférence on Systems and Informatics » (ICSAI 2014) à Shangai en Chine.

Dans ce cas, le réseau de neurones est cependant configuré au moyen d'une méthode d'apprentissage supervisée. De plus, une telle méthode d'apprentissage est effectuée au sein de l'aéronef, autrement dit l'apprentissage du réseau de neurones se fait lors d'une mission de l'aéronef.

Une telle publication ne décrit donc pas un système de contrôle permettant de réaliser une optimisation des coûts de maintenance liés à l'utilisation réelle d'un aéronef.

On connaît également, tels que décrits dans le document US 6 466 888, des systèmes utilisant un réseau de neurones configurés pour estimer des données de vol d'un aéronef, tel un hélicoptère.

Ces systèmes d'estimation utilisent des données de vol telles que la vitesse, le dérapage et l'angle d'attaque de l'aéronef. Des capteurs de vol existants peuvent être utilisés pour mesurer des paramètres de vol et les fournir à un réseau neuronal permettant de calculer des estimations des données de vol.

Ces estimations des données de vol sont alors utilisées par le pilote et par une équipe au sol pour leur communiquer des indications sur les conditions de vol dangereuses telles que le décrochage, la perte d'efficacité d'un rotor de queue et l'état d'anneaux tourbillonnaires pouvant générer une perte de portance d'un tel hélicoptère.

Cependant, comme précédemment, un tel document ne divulgue donc pas un système de contrôle permettant de réaliser une optimisation des coûts de maintenance liés à l'utilisation réelle d'un aéronef.

On connaît aussi, tel que décrit dans le document FR 2 989 186, un procédé permettant d'analyser des données de vol d'un aéronef pour déterminer, pour chaque donnée de vol, une phase de vol correspondante de l'aéronef. Les données de vol constituant une mission d'aéronef peuvent ainsi être découpées en une pluralité de groupes représentatifs des différentes phases de vol de la mission.

Un tel découpage des données enregistrées est alors effectué automatiquement et peut être robuste quant aux défauts d'enregistrement.

Cependant, ce découpage des données de vol est ici réalisé pour permettre aux compagnies aériennes de comprendre en détail le déroulement d'un vol à partir d'enregistrements réguliers de ces données de vol, effectués au cours de chaque vol de chacun de leurs avions. Le système peut alors détecter des évènements prédéfinis survenus au cours du vol et identifier qu'un incident technique s'est produit au cours de ce vol et/ou qu'une procédure ou une condition prévue par une procédure de vol n'a pas été respectée.

Le but de ce découpage des données de vol n'est donc pas d'identifier un niveau d'endommagement d'une pièce d'un aéronef pour optimiser les coûts de maintenance correspondant.

En outre, tel que décrit dans le document EP 2 676 176, il est connu de surveiller des données de vol d'un aéronef pour pouvoir anticiper des opérations de maintenance d'un moteur d'aéronef. Un tel système de surveillance peut par ailleurs utiliser un réseau de neurones pour analyser les variations de ces données de vol au cours du temps.

Ces systèmes de surveillance surveillent ainsi le fonctionnement des moteurs et l'évolution de leurs états selon une analyse non supervisée d'une trajectoire de variation des mesures liées à un moteur telles que notamment la vitesse de rotation d'un arbre de sortie du moteur, le débit carburant consommé par le moteur et la température des gaz d'échappement du moteur.

De tels systèmes de surveillance permettent alors de pronostiquer et de planifier avec précision les opérations de maintenance.

Cependant, dans ce cas, ce n'est pas un niveau d'endommagement d'une pièce qui est estimé, mais une trajectoire des valeurs futures d'un paramètre de fonctionnement tel que notamment la vitesse de rotation de l'arbre de sortie du moteur, le débit carburant et la température des gaz d'échappement à l'aide d'autres trajectoires issues d'une base de données.

Le document FR 3 006 785 décrit quant à lui un procédé de surveillance du fonctionnement d'un moteur d'aéronef à partir d'une carte d'états de fonctionnement d'un moteur d'un aéronef.

La carte d'états de fonctionnement est en outre réalisée à partir d'un fond de carte établi à partir d'une base de données d'états de fonctionnement d'une flotte de moteurs d'aéronefs stockant des séries de paramètres, chaque série de paramètres comprenant des paramètres caractérisant un état de fonctionnement d'un des moteurs et éventuellement au moins une information de dégradation indicative d'un niveau de dégradation du moteur de l'aéronef.

En outre, ce document divulgue notamment qu'une telle carte est établie à partir d'une base de données.

Le fond de carte comprend un ensemble de cellules, chacune cellule étant décrite par un vecteur-code proche d'une ou plusieurs séries de paramètres stockées dans la base de données, à au moins une des cellules étant attribuée au moins un taux de dégradation relatif à une information de dégradation, correspondant à la proportion des séries de paramètres comprenant l'information de dégradation parmi les séries de paramètres proches du vecteur-code de la cellule.

Un calculateur d'une station sol exécute alors une étape consistant à déterminer une série de paramètres caractérisant un état de fonctionnement du moteur à surveiller, à partir de données mesurées sur le moteur à surveiller. Puis, le calculateur met en oeuvre une étape consistant à projeter la série de paramètres déterminée dans une cellule, dite cellule cible, de la carte d'états de fonctionnement de moteurs d'aéronefs, et une étape consistant à acquérir le au moins un taux de dégradation attribué à la cellule cible.

Ainsi, il est décrit l'utilisation d'une carte comportant des zones représentatives des états de fonctionnement d'un moteur parmi un état de fonctionnement dégradé et un état de fonctionnement normal.

Des procédés différents appartenant à d'autres domaines techniques ont également été décrits dans les documents US 2008/091630 et FR 3 028 331.

La présente invention a alors pour objet de proposer un procédé et un système de contrôle alternatif permettant de s'affranchir des limitations mentionnées ci-dessus. Le procédé et le système de contrôle permettent en effet de fournir une solution visant à personnaliser des opérations de maintenance d'un aéronef en fonction de l'utilisation réelle de celui-ci et par conséquent du niveau d'usure et/ou d'endommagement réel d'au moins une pièce le constituant. Il peut être ainsi possible de réduire les coûts liés à la maintenance et à l'entretien des aéronefs dont l'utilisation réelle génère de faibles sollicitations mécaniques sur les pièces le constituant.

L'invention se rapporte donc à un procédé de contrôle d'un niveau d'endommagement d'au moins une pièce d'aéronef dans au moins une phase de vol donnée.

Selon l'invention, un tel procédé est remarquable en ce qu'il comporte au moins :
- une étape de collecte pour recevoir des données représentatives de mesures d'au moins un paramètre de vol choisi parmi le groupe comportant une position, une vitesse de déplacement, une accélération et un paramètre environnemental de l'aéronef, les données étant générées lors d'une mission de l'aéronef par au moins un capteur embarqué sur l'aéronef, chaque donnée correspondant à un point d'entrée représentatif du ou des paramètres de vol dans un espace multidimensionnel,
- une étape de projection pour projeter selon une méthode déterminée chaque point d'entrée de l'espace multidimensionnel sur une carte préalablement construite pour former un point image, la carte comportant au moins deux zones disjointes délimitées par des lignes de contour fermé, chaque zone étant représentative d'une phase de vol de l'aéronef choisie parmi le groupe comportant une phase d'approche, une phase d'atterrissage, une phase en vol stationnaire, une phase d'évolution à basse vitesse, une phase de décollage, une phase en descente, une phase en montée, une phase au sol, une phase de virage, une phase en palier, une phase de virages en point fixe, une phase de ressources, une phase de roulage et une phase de transitions,
- une étape d'identification pour identifier pour chaque point image une zone image parmi les au moins deux zones disjointes dans laquelle se trouve le point image, et
- une étape d'analyse pour dénombrer, pour la pièce considérée et pour la phase de vol considérée, le niveau d'endommagement de la pièce correspondant au produit d'un coefficient prédéterminé associé à ladite phase de vol multiplié par la durée d'utilisation totale de la pièce correspondante à cette même phase de vol, la durée d'utilisation totale de la pièce dans ladite phase de vol étant calculée au préalable, ladite phase de vol correspondant à la zone image identifiée parmi lesdites au moins deux zones disjointes dans l'étape d'identification.

Autrement dit, un tel procédé permet de déterminer automatiquement le niveau d'endommagement réel d'une ou plusieurs pièces d'un aéronef en fonction des différentes phases de vols qu'il a effectuées et donc de l'utilisation réelle de cet aéronef.

Pour ce faire, les données représentatives des mesures d'au moins un paramètre de vol sont collectées à chaque mission ou vol de l'aéronef et par exemple enregistrées dans une mémoire. Le ou les paramètres de vol peuvent être de différentes natures et être générés par exemple par un ou plusieurs capteurs mesurant une vitesse de déplacement verticale de l'aéronef, une altitude issue d'un senseur barométrique et/ou d'un système de géolocalisation par satellites ou autres, une hauteur fournie par exemple par un altimètre radar, des accélérations issues d'accéléromètres ou d'une centrale inertielle, une vitesse air de l'aéronef issue par exemple par des sondes Pitot, une position d'un organe de commande manuelle de l'aéronef mesurée avec un capteur de position usuel par exemple, de vibrations mesurées sur l'aéronef et des attitudes de l'aéronef issues d'un ensemble de capteurs sur trois axes permettant de définir la position d'un aéronef. Un tel ensemble de capteurs peut être une partie d'un système connu sous l'acronyme AHRS désignant en langue anglaise l'expression "Attitude and Heading Referential System".

Les données reçues, qui peuvent être par exemple des données brutes, des données cryptées ou codées, peuvent notamment être traitées, décodées ou décryptées pour être exploitées. De telles données forment alors respectivement une multitude de points d'entrée représentatifs du ou des paramètres de vol dans l'espace multidimensionnel. De telles données permettent de former, à chaque acquisition, un point d'entrée représentant une phase de vol de l'aéronef. Ce point d'entrée est représenté dans un espace multidimensionnel dont la dimension est égale au nombre de paramètres de vol simultanément mesurés par les différents capteurs.

La carte peut quant à elle être préalablement construite par exemple par des calculs, des simulations ou encore des essais en vols.

La projection des différents points d'entrée sur la carte permet de générer une multitude de points image appartenant respectivement aux différentes zones de la carte.

On identifie ainsi pour chaque point image une zone image correspondante et l'analyse statistique des différentes zones images identifiées permet de déterminer l'utilisation réelle d'un aéronef en fonction par exemple de la fréquence et de l'intensité des différentes phases de vol que l'aéronef a effectuées lors de ses différentes missions.

Les zones disjointes de la carte avec lesquelles chaque zone image correspond sont en effet représentatives respectivement des différentes phases de vol possibles pour un aéronef en général et pour un giravion en particulier. En outre, deux ou plusieurs zones disjointes de la carte peuvent correspondre à une même phase de vol choisie parmi le groupe comportant une phase d'approche, une phase d'atterrissage, une phase en vol stationnaire, une phase d'évolution à basse vitesse, une phase de décollage, une phase en descente, une phase en montée, une phase au sol, une phase de virage, une phase en palier, une phase de virages en point fixe, une phase de ressources, une phase de roulage et une phase de transitions.

L'étape d'analyse statistique permet en outre de corréler chaque zone image, et donc chaque phase de vol effectuée par un aéronef, à au moins une donnée caractéristique de l'endommagement de la ou des pièces d'aéronef. Une donnée caractéristique de l'endommagement permet ainsi de quantifier un niveau d'endommagement au moyen par exemple d'un nombre de cycles, du temps ou des compteurs dédiés tels des compteurs d'endofluage.

Ainsi, un coefficient prédéterminé d'un niveau d'endommagement peut être affecté à chaque phase de vol et donc à chaque zone de la carte. Un tel coefficient prédéterminé d'un niveau d'endommagement peut alors correspondre à l'endommagement causé par une heure d'utilisation de la au moins une pièce.

Un tel coefficient prédéterminé d'un niveau d'endommagement peut notamment être différent entre deux zones disjointes de la carte. En effet, certaine phases de vol, comme par exemple les phases de vol stationnaire, peuvent générer des sollicitations mécaniques plus importantes que d'autres phases de vol telles que les phases en descente. Ainsi, le coefficient prédéterminé d'un niveau d'endommagement de la zone représentative des phases de vol stationnaire peut présenter une valeur supérieure à celle du coefficient prédéterminé d'un niveau d'endommagement de la zone représentative des phases de vol en descente.

Un tel coefficient prédéterminé d'un niveau d'endommagement peut également être différent entre deux pièces disjointes.

Ainsi, il peut être avantageux de stocker dans un tableau de valeurs ou dans une matrice une pluralité de coefficients prédéterminés de niveaux d'endommagement.

Par exemple, une telle matrice peut alors comporter au moins deux lignes correspondant à deux phases de vol et deux colonnes correspondant à deux pièces de l'aéronef ou encore à deux groupes de pièces.

Pour chaque pièce, l'étape d'analyse permet alors de calculer le niveau d'endommagement total correspondant à la somme de chaque niveau d'endommagement des zones images identifiées multiplié par chaque durée d'utilisation.

De telles durées d'utilisation peuvent en outre être mesurées à chaque instant et stockées dans une mémoire, la durée totale correspondant à une phase de vol particulière étant alors calculée en ajoutant l'ensemble des durées stockées dans la mémoire pour cette phase de vol.

Alternativement ou complémentairement, un calculateur et une horloge peuvent être utilisés pour compter la durée d'utilisation correspondant à chaque phase de vol à partir des instants enregistrés par l'horloge.

Un tel niveau d'endommagement total est ainsi lié aux phases de vol réellement effectuées par un aéronef à chacune de ses missions. De plus, le niveau d'endommagement total peut être représentatif d'une pièce ou d'un groupe de pièces et peut être déterminé en vol lors d'une mission de l'aéronef ou encore au sol une fois la mission de l'aéronef terminée.

Avantageusement, la carte peut être construite lors d'une phase préalable d'apprentissage selon la méthode déterminée au moyen d'un ensemble de données standardisées d'apprentissage.

Ces données standardisées d'apprentissage sont par exemple obtenues à partir de mesures effectuées par des capteurs équipant un aéronef prototype lors de vols d'essai.

En pratique, la méthode déterminée peut être une méthode reposant sur une cartographie auto-adaptative de Kohonen.

Une telle méthode de cartographie auto-adaptative est une classe de réseaux de neurones dont l'apprentissage est de type non supervisé. Cette méthode de cartographie auto-adaptative est également couramment désignée par l'expression en langue anglaise "Self Organizing Maps" ou par son acronyme "SOM".

Selon un premier exemple de réalisation de l'invention, la carte peut être de type tridimensionnel comportant une forme sphérique à maillage icosaédrique.

En d'autres termes, cette carte forme alors un espace fermé excluant tout effet de bord. Les frontières de discrimination entre les zones disjointes de la carte peuvent être déterminées par exemple au moyen d'un découpage de l'espace multidimensionnel selon un diagramme dit « de Voronoï », calculé à l'issue de la phase préalable d'apprentissage.

Selon un second exemple de réalisation de l'invention, la carte peut être de type bidimensionnel comportant une forme rectangulaire à maillage hexagonal.

Un tel type de carte permet en effet de simplifier la projection des points d'entrée dans la carte puis l'identification de la zone image correspondant à chaque point image. Une carte bidimensionnelle nécessite des capacités de calcul limitées par rapport à celles d'une carte tridimensionnelle.

Alternativement selon un troisième exemple de réalisation de l'invention, la carte peut être de type bidimensionnel comportant une forme rectangulaire à maillage rectangulaire.

En pratique, le procédé peut comporter une étape de standardisation pour standardiser les données en générant des données standardisées représentatives des mesures du ou des paramètres de vol, les données standardisées correspondant aux points d'entrée représentatifs du ou des paramètres de vol dans l'espace multidimensionnel.

Une telle étape de standardisation des données peut donc être mise en oeuvre après l'étape de collecte permettant de recevoir des données représentatives de mesures d'au moins un paramètre de vol.

Avantageusement, l'étape de standardisation peut comporter une sous étape de normalisation des données.

Une telle sous étape de normalisation permet de réaliser un prétraitement des données par exemple au moyen de transformations polynomiales, exponentielles et logarithmiques. De cette manière, les données standardisées ne sont plus dépendantes du contexte d'acquisition des données.

Selon un autre aspect de l'invention, l'étape de standardisation peut comporter une sous étape de sélection des données.

Autrement dit, la sous étape de sélection permet d'exclure par exemple des données aberrantes ou peu pertinentes pour générer les données standardisées.

En pratique, l'étape d'analyse peut comporter une sous étape d'estimation d'une fiabilité de prédiction associée à l'étape d'identification de la zone image.

Une telle sous étape d'estimation de la fiabilité est ainsi utile pour pourvoir effectuer en sortie, après analyse, une sélection de pertinence parmi les différentes zones images identifiées.

Avantageusement, le procédé peut comporter une étape d'enregistrement des zones images et une étape de restitution du niveau d'endommagement de la ou des pièces d'aéronef.

En effet, une fois l'étape d'analyse réalisée, il peut être utile d'enregistrer les résultats correspondant aux différentes zones images identifiées puis ultérieurement de réaliser une restitution de ces résultats sous forme d'un tableau ou d'un graphique tel que par exemple un histogramme.

Selon un autre aspect de l'invention, le procédé peut comporter une étape d'adaptation pour transformer les au moins deux zones disjointes de la carte au cours du temps au moyen des points d'entrée.

Une telle étape d'adaptation permet ainsi de modifier la carte a posteriori en fonction des données réelles relevées par une flotte d'aéronefs. Cette transformation des au moins deux zones disjointes peut consister en une modification de la forme, de la disposition et/ou de la taille de chacune des zones sur la carte.

Cette étape d'adaptation peut aussi consister à modifier le nombre de zones disjointes de la carte. Ce nombre peut ainsi être augmenté si par exemple on souhaite affiner la précision de la détermination du niveau d'endommagement des pièces de l'aéronef. Le nombre de zones disjointes peut également être diminué si par exemple on souhaite simplifier ou accélérer cette détermination du niveau d'endommagement des pièces de l'aéronef.

En outre, un tel procédé de contrôle peut être mis en oeuvre de différentes manières correspondant à différents modes de réalisation complémentaires et pouvant impliquer un même aéronef.

Ainsi selon un premier mode de réalisation de l'invention, le procédé étant mis en oeuvre dans l'aéronef, le procédé peut comporter une étape de génération d'une information pour informer au moins un pilote de l'aéronef que le niveau d'endommagement d'une pièce d'aéronef est supérieur à une première valeur de seuil prédéterminée.

Autrement dit, le procédé de contrôle est dans ce cas mis en oeuvre pendant une mission de l'aéronef et par exemple en vol. Si le procédé permet de détecter qu'un niveau d'endommagement a atteint la première valeur de seuil, alors une étape d'information peut être mise en oeuvre. Une telle étape d'information peut par exemple comprendre l'affichage d'un message d'information sur un écran de contrôle.

Le pilote peut alors éventuellement choisir d'écourter sa mission si le message d'information concerne le niveau d'endommagement d'une ou plusieurs pièces critiques. Dans d'autres cas où le message d'information est juste indicatif, le pilote peut également choisir de continuer sa mission. En outre, le procédé peut alors éventuellement comporter une étape de planification d'une opération de maintenance visant à remplacer la pièce endommagée.

Selon un second mode de réalisation de l'invention, le procédé étant mis en oeuvre au sol dans une station sol, le procédé peut comporter une étape de planification pour planifier une maintenance de l'aéronef et pour procéder au remplacement de la ou des pièces d'aéronef lorsque le niveau d'endommagement de la ou des pièces d'aéronef est supérieur à une seconde valeur de seuil prédéterminée.

Selon le second mode de réalisation, l'étape de planification permet de prévenir une équipe de maintenance que le niveau d'endommagement d'une ou plusieurs pièces a atteint la seconde valeur de seuil prédéterminée. Cette pièce peut alors être remplacée immédiatement ou à bref délai par cette équipe de maintenance en charge de l'entretien de cet aéronef.

Une telle seconde valeur de seuil prédéterminée peut être égale à la première seconde valeur de seuil prédéterminée. Cependant, la seconde valeur de seuil peut également être différente de la première valeur de seuil lorsque notamment le procédé peut être mis en oeuvre à la fois en vol dans un aéronef et au sol dans une station sol.

La présente invention a aussi pour objet un système de contrôle d'un niveau d'endommagement d'au moins une pièce d'aéronef dans au moins une phase de vol donnée.

Selon l'invention, ce système de contrôle est remarquable en ce qu'il comporte :
- une interface de connexion configurée pour recevoir des données représentatives de mesures d'au moins un paramètre de vol choisi parmi le groupe comportant une position, une vitesse de déplacement, une accélération et un paramètre environnemental de l'aéronef, les données étant générées sur une période de temps lors d'une mission de l'aéronef par au moins un capteur embarqué sur cet aéronef puis recueillies par l'interface de connexion, chaque donnée correspondant à un point d'entrée représentatif du paramètre de vol dans un espace multidimensionnel,
- des moyens de traitement configurés pour projeter selon une méthode déterminée chaque point d'entrée de l'espace multidimensionnel sur une carte préalablement construite pour former un point image, la carte comportant au moins deux zones disjointes délimitées par des lignes de contour fermé, chaque zone étant représentative d'une phase de vol de l'aéronef choisie parmi le groupe comportant une phase d'approche, une phase d'atterrissage, une phase en vol stationnaire, une phase d'évolution à basse vitesse, une phase de décollage, une phase en descente, une phase en montée, une phase au sol, une phase de virage, une phase en palier, une phase de virages en point fixe, une phase de ressources, une phase de roulage et une phase de transitions,

- des moyens d'identification configurés pour identifier pour chaque point image une zone image parmi les au moins deux zones disjointes,
- des moyens d'analyse configurés pour dénombrer, pour la pièce considérée et pour la phase de vole considérée, le niveau d'endommagement de la pièce correspondant au produit d'un coefficient prédéterminé associé à ladite phase de vol multiplié par la durée d'utilisation totale de la pièce correspondante à cette même phase de vol, la durée d'utilisation totale de la pièce dans ladite phase de vol étant calculée au préalable, ladite phase de vol correspondant à la zone image identifiée parmi lesdites au moins deux zones disjointes dans l'étape d'identification.

Un tel système de contrôle peut notamment être agencé dans un aéronef ou encore dans une station sol et est dans ce cas déporté de l'aéronef.

Lorsque le système de contrôle est agencé sur l'aéronef, les données peuvent être transmises instantanément en vol ou de manière différée à l'interface de connexion pour être traitées.

Dans le cas où le système de contrôle est agencé dans la station sol, les données sont alors transférées au système de contrôle instantanément en vol ou à l'issue de la mission effectuée par l'aéronef.

Les moyens de traitement peuvent être désignés par le terme de calculateur, les moyens d'identification par le terme d'identificateur et les moyens d'analyse par le terme d'analyseur.

En outre, les moyens de traitement, les moyens d'identification et les moyens d'analyse peuvent respectivement comporter par exemple au moins un processeur et au moins une mémoire, au moins un circuit intégré, au moins un système programmable, au moins un circuit logique, au moins un ordinateur, une unité centrale de traitement connue sous l'acronyme CPU, une unité graphique de traitement GPU, une unité digitale connue sous l'acronyme DSP, un microcontrôleur...

Par ailleurs, les moyens de traitement, les moyens d'identification et les moyens d'analyse peuvent former des ensembles disjoints les uns des autres ou bien former un ensemble unique apte à réaliser les différentes tâches du système de contrôle.

Lorsque le système de contrôle est agencé sur l'aéronef, les moyens de traitement, les moyens d'identification et les moyens d'analyse peuvent être rapportés sur l'aéronef ou encore être formés par exemple par un ordinateur pré-équipant l'aéronef.

En outre, les moyens d'analyse peuvent comporter une horloge et un calculateur pour permettre de calculer la durée total d'utilisation d'une pièce ou d'un groupe de pièces correspondant à chaque phase de vol identifiée.

L'invention concerne également un aéronef comportant au moins une pièce d'aéronef présentant un niveau d'endommagement évoluant au cours du temps en fonction d'une utilisation de cet aéronef.

Selon l'invention, un tel aéronef est remarquable en ce qu'il comporte un système de contrôle d'un niveau d'endommagement de la ou des pièces d'aéronef tel que précédemment décrit.

Par suite, un tel aéronef permet également de mettre en oeuvre le procédé de contrôle précédemment décrit lors d'une mission de l'aéronef ou encore une fois la mission de cet aéronef achevée.

En pratique, le système de contrôle peut comporter au moins un organe d'information configuré pour informer au moins un pilote de l'aéronef que le niveau d'endommagement de la ou des pièces d'aéronef est supérieur à une première valeur de seuil prédéterminée.

Un tel organe d'information peut avantageusement être agencé sur une planche de bord de l'aéronef. L'organe d'information peut être dédié à l'affichage de messages d'information du système de contrôle ou bien encore comporter un écran permettant un affichage aux fonctions d'affichage mutualisées avec d'autres systèmes de l'aéronef.

L'invention et ses avantages apparaîtront avec plus de détails dans le cadre de la description qui suit avec des exemples donnés à titre illustratif en référence aux figures annexées qui représentent :
la figure 1, un schéma de principe d'un système de contrôle conforme à l'invention,
la figure 2, un schéma illustrant un aéronef conforme à l'invention,
la figure 3, un schéma illustrant une station sol, conformément à l'invention,
la figure 4, un logigramme représentatif d'un premier mode de réalisation du procédé de contrôle conforme à l'invention,
la figure 5, un logigramme représentatif d'un second mode de réalisation du procédé de contrôle conforme à l'invention,
la figure 6, une première variante de carte, conformément à l'invention, et
la figure 7, une seconde variante de carte, conformément à l'invention.

Les éléments présents dans plusieurs figures distinctes sont affectés d'une seule et même référence.

Comme déjà évoqué, l'invention se rapporte au domaine des systèmes de contrôle d'un niveau d'endommagement d'au moins une pièce d'aéronef.

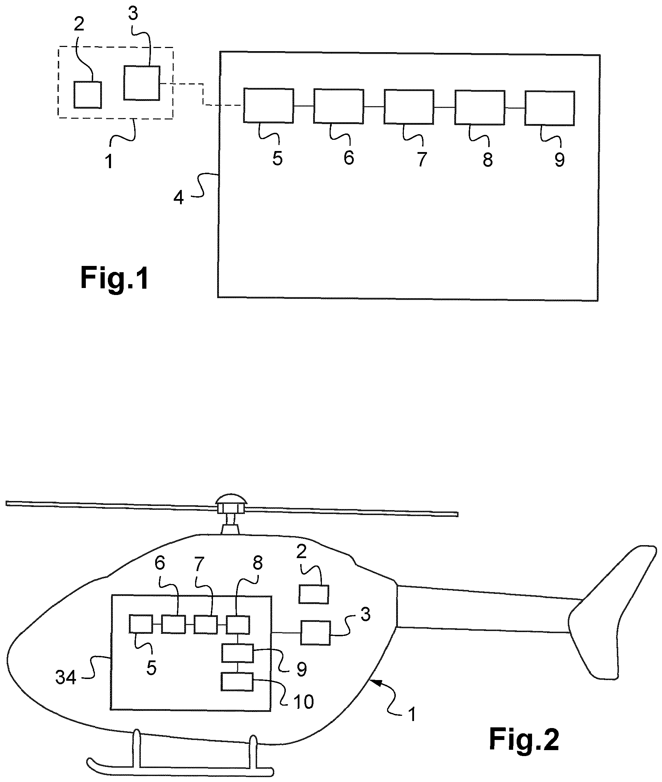

Tels que représentés aux figures 1 à 3 de tels systèmes de contrôle 4, 34, 44 peuvent se présenter sous différentes formes.

Cependant, ces systèmes de contrôle 4, 34, 44 comportent chacun au moins une interface de connexion 5 configurée pour recevoir des données représentatives de mesures d'au moins un paramètre de vol choisi parmi le groupe comportant une position, une vitesse de déplacement, une accélération et un paramètre environnemental de l'aéronef 1. De telles données sont générées sur une période de temps lors d'une mission d'un aéronef 1 par au moins un capteur 3 embarqué sur l'aéronef 1, puis recueillies par l'interface de connexion 5.

Le ou les paramètres de vol peuvent ainsi être de différentes natures et être mesurés par exemple par un ou plusieurs capteurs 3. Par exemple, un paramètre de vol peut être une vitesse de déplacement verticale de l'aéronef 1, une altitude issue d'un senseur barométrique et/ou d'un système de géolocalisation par satellites, une hauteur fournie par un altimètre radar, des accélérations issues d'accéléromètres ou d'une centrale inertielle, une vitesse air de l'aéronef 1 issue de sondes Pitot, une position d'un organe de commande manuelle de l'aéronef 1, de vibrations mesurées sur l'aéronef 1 et des attitudes de l'aéronef 1 issues d'un ensemble de capteurs sur trois axes permettant de définir la position de l'aéronef 1. Un tel ensemble de capteurs 3 est généralement connu sous l'acronyme AHRS désignant en langue anglaise l'expression "Attitude and Heading Referential System".

Les systèmes de contrôle 4, 34, 44 peuvent avantageusement comporter chacun une unité de traitement 6 configurée pour générer des données standardisées représentatives des mesures du ou des paramètres de vol, chaque donnée standardisée correspondant alors à un point d'entrée représentatif du ou des paramètres de vol dans un espace multidimensionnel.

En outre, les systèmes de contrôle 4, 34, 44 comportent aussi des moyens de traitement 7 configurés pour projeter selon une méthode déterminée chaque point d'entrée de l'espace multidimensionnel sur une carte préalablement construite pour former un point image.

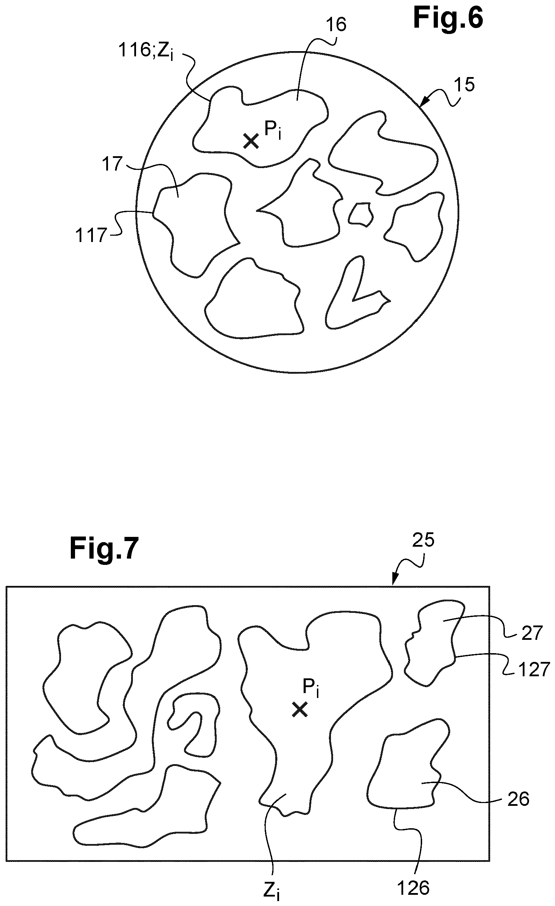

Telles que décrites aux figures 6 et 7, selon deux variantes, une telle carte 15, 25 comporte au moins deux zones disjointes 16 et 17, 26 et 27 délimitées chacune par des lignes de contour fermé 116 et 117, 126 et 127.

De telles zones 16 et 17, 26 et 27 sont représentatives de différentes phases de vol de l'aéronef 1 choisies parmi le groupe comportant une phase d'approche, une phase d'atterrissage, une phase en vol stationnaire, une phase d'évolution à basse vitesse, une phase de décollage, une phase en descente, une phase en montée, une phase au sol, une phase de virage, une phase en palier, une phase de virages en point fixe, une phase de ressources et une phase de transitions.

Les systèmes de contrôle 4, 34, 44 comportent alors des moyens d'identification 8 configurés pour identifier pour chaque point image Pi une zone image Zi parmi les au moins deux zones disjointes 16 et 17, 26 et 27 et des moyens d'analyse 9 configurés pour analyser statistiquement les zones images Zi identifiées et pour déterminer le niveau d'endommagement de la ou des pièces 2 d'aéronef.

Tels que représentés aux figures 1 et 2, l'unité de traitement 6, les moyens de traitement 7, les moyens d'identification 8 et les moyens d'analyse 9 peuvent être des organes disjoints les uns des autres.

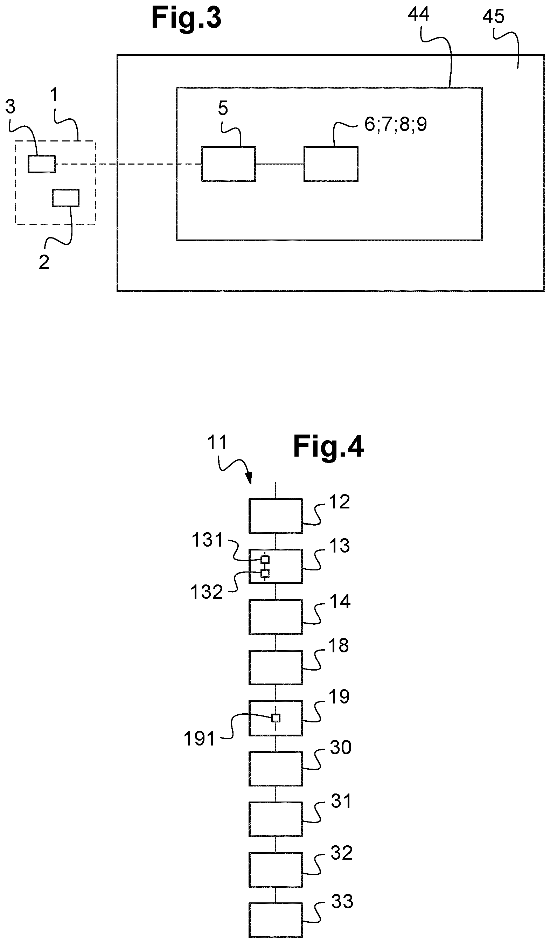

Alternativement selon une autre variante et tels que représentés à la figure 3, l'unité de traitement 6, les moyens de traitement 7, les moyens d'identification 8 et les moyens d'analyse 9 peuvent également être associés dans un même organe se présentant par exemple sous la forme d'un ordinateur.

Quelle que soit la variante retenue, l'unité de traitement 6, les moyens de traitement 7, les moyens d'identification 8 et les moyens d'analyse 9 peuvent chacun comprendre par exemple au moins un processeur et au moins une mémoire, au moins un circuit intégré, au moins un système programmable, au moins un circuit logique, ces exemples ne limitant pas la portée donnée aux expressions « unité de traitement », « moyens de traitement », « moyens d'identification » et « moyens d'analyse ». Le terme processeur peut désigner aussi bien une unité centrale de traitement connue sous l'acronyme CPU, une unité graphique de traitement GPU, une unité digitale connue sous l'acronyme DSP, un microcontrôleur...

Selon l'exemple de la figure 2, un tel système de contrôle 34 peut être embarqué à bord de l'aéronef 1. Dans ce cas, le système de contrôle 34 peut comporter au moins un organe d'information 10 configuré pour informer au moins un pilote de l'aéronef 1 lorsque le niveau d'endommagement de la ou des pièces 2 d'aéronef est supérieur à une première valeur de seuil prédéterminée.

Un tel organe d'information 10 peut alors générer un signal d'information sonore, visuel ou vibratoire et le pilote de l'aéronef 1 peut alors, en fonction du risque potentiel lié à ce niveau d'endommagement ou à la pièce considérée, choisir par exemple d'adapter et/ou d'écourter sa mission.

Dans ce cas, le système de contrôle 34 peut notamment recevoir les données en temps réel lors d'une mission de l'aéronef 1.

Eventuellement, lorsque le niveau d'endommagement de la ou des pièces 2 d'aéronef est supérieur à une première valeur de seuil prédéterminée, l'information peut également être transmise à un organe de mémorisation ou un organe de transmission pour communiquer l'information par exemple à une station sol. Une telle communication de l'information peut être effectuée en vol pendant la mission de l'aéronef ou bien ultérieurement une fois la mission de l'aéronef achevée.

Selon la variante de la figure 3, un système de contrôle 44 peut également alternativement ou complémentairement être agencé dans une station sol 45.

Dans ce cas, le système de contrôle 44 est disjoint de l'aéronef 1 et peut notamment recevoir les données une fois la mission de l'aéronef 1 terminée.

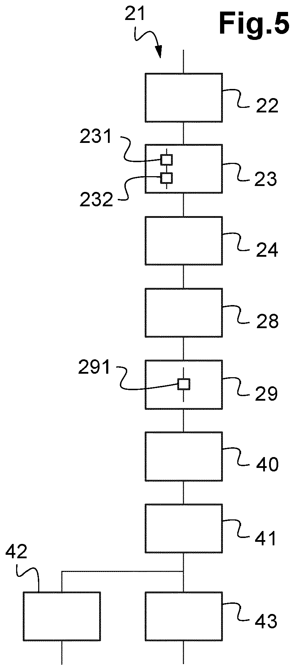

Telle que représentée aux figures 4 et 5, l'invention se rapporte également à un procédé 11, 21 de contrôle d'un niveau d'endommagement d'au moins une pièce 2 d'aéronef 1.

Ces procédés 11, 21 comportent ainsi chacun une étape de collecte 12, 22 pour recevoir les données représentatives de mesures d'un ou des paramètres de vol choisis parmi le groupe comportant une position, une vitesse de déplacement, une accélération et un paramètre environnemental de l'aéronef 1. Comme déjà indiqué précédemment, de telles données sont générées sur une période de temps lors d'une mission de l'aéronef 1 par au moins un capteur 3 embarqué sur l'aéronef 1.

Les procédés 11, 21 peuvent notamment comporter ensuite une étape de standardisation 13, 23 pour standardiser les données en générant des données standardisées représentatives des mesures du ou des paramètres de vol, chaque donnée standardisée correspondant ainsi à un point d'entrée représentatif du ou des paramètres de vol dans un espace multidimensionnel.

Avantageusement, ces étapes de standardisation 13, 23 peuvent comporter respectivement une sous étape de normalisation 131, 231 des données ainsi qu'une sous étape de sélection 132, 232 des données.

Ensuite, les procédés 11, 21 comportent alors une étape de projection 14, 24 pour projeter selon une méthode déterminée chaque point d'entrée de l'espace multidimensionnel sur une carte 15, 25 préalablement construite pour former un point image Pi.

Comme déjà indiquées, les zones 16 et 17, 26 et 27 de la carte 15, 25 sont chacune représentatives d'une phase de vol de l'aéronef 1 choisie parmi le groupe comportant une phase d'approche, une phase d'atterrissage, une phase en vol stationnaire, une phase d'évolution à basse vitesse, une phase de décollage, une phase en descente, une phase en montée, une phase au sol, une phase de virage, une phase en palier, une phase de virages en point fixe, une phase de ressources, une phase de roulage et une phase de transitions.

Les procédés 11, 21 comportent alors une étape d'identification 18, 28 pour identifier pour chaque point image Pi une zone image Zi parmi les au moins deux zones disjointes 16 et 17, 26 et 27 dans laquelle se trouve le point image Pi et une étape d'analyse 19, 29 pour analyser statistiquement les zones images identifiées pour déterminer le niveau d'endommagement de la ou des pièces 2 d'aéronef.

En pratique, ces étapes d'analyse 19, 29 peuvent avantageusement comporter une sous étape d'estimation 191, 291 d'une fiabilité de prédiction associée à l'étape d'identification 18, 28 de la zone image.

Une telle fiabilité de prédiction peut avantageusement être liée à la précision de mesure des différents capteurs 3 utilisés ou être déterminée à partir de règles prédéterminées par des calculs, des simulations ou des essais en vol notamment.

En outre, une étape d'enregistrement 30, 40 peut également permettre de mémoriser les différentes zones images Zi rencontrées durant une mission et une étape de restitution 31, 41 peut alors permettre de restituer ultérieurement ou simultanément le niveau d'endommagement de la ou des pièces 2 d'aéronef.

En outre, un tel niveau d'endommagement d'une pièce 2 est directement fonction de la nature et du nombre des zones images Zi relevées lors des différentes missions effectuées par l'aéronef 1.

Par exemple, le niveau d'endommagement d'une pièce 2 d'aéronef pour laquelle deux zones images Zi ont été identifiées et correspondant à une phase de décollage et une phase d'atterrissage est bien évidemment inférieur au niveau d'endommagement d'une même pièce d'aéronef pour laquelle trois zones images Zi ont été identifiées et correspondant à une phase de décollage, une phase de vol stationnaire et une phase d'atterrissage.

Par exemple, un coefficient prédéterminé d'un niveau d'endommagement peut être affecté à chaque phase de vol et donc à chaque zone de la carte. De tels différents coefficients prédéterminés du niveau d'endommagement sont alors avantageusement déterminés en amont d'une mission de l'aéronef par des essais, des simulations et/ou des retours d'expérience. Les coefficients d'endommagement sont ensuite mémorisés et stockés dans une mémoire qui peut être embarquée dans l'aéronef, dans un dispositif électroportatif ou éventuellement dans un ordinateur au sol.

De manière avantageuse, les coefficients d'endommagement peuvent être contenus dans un tableau de valeurs ou encore une matrice. Chaque ligne peut correspondre par exemple à une phase de vol et chaque colonne peut quant à elle correspondre à une pièce particulière, à un groupe de pièces ou encore à une zone de l'aéronef.

Un tel coefficient prédéterminé d'un niveau d'endommagement peut notamment être différent entre deux zones disjointes 16 et 17, 26 et 27 d'une même carte 15, 25. En effet, certaine phases de vol, comme par exemple les phases de vol stationnaire, peuvent générer des sollicitations mécaniques plus importantes que d'autres phases de vol telles que les phases en descente. Ainsi, le coefficient prédéterminé d'un niveau d'endommagement de la zone 16, 26 représentative des phases de vol stationnaire peut présenter une valeur supérieure au coefficient prédéterminé d'un niveau d'endommagement de la zone 17, 27 représentative des phases de vol en descente.

L'étape d'analyse 19, 29 permet alors de dénombrer pour une pièce 2 et pour une phase de vol, le niveau d'endommagement correspondant à au produit d'un coefficient prédéterminé d'un niveau d'endommagement prédéterminé de cette zone image Zi identifiée multiplié par la durée d'utilisation réelle correspondant à cette phase de vol.

Un tel niveau d'endommagement total de cette pièce 2 correspond donc à la somme des niveaux d'endommagement liés aux différentes phases de vol réellement effectuées par un aéronef 1 à chacune de ses missions. Un tel niveau d'endommagement total d'une pièce 2 peut en outre être déterminé en vol lors d'une mission de l'aéronef 1 ou encore au sol une fois la mission de l'aéronef 1 terminée.

Tels que représentés, les procédés 11, 21 peuvent ensuite comporter une étape d'adaptation 32, 42 pour transformer les au moins deux zones disjointes 16 et 17, 26 et 27 de la carte 15, 25 au cours du temps au moyen des points d'entrée.

Cette étape d'adaptation 32, 42 permet ainsi de modifier la carte 15, 25 a posteriori en fonction par exemple des données réelles relevées par une flotte d'aéronefs 1. Cette transformation des au moins deux zones disjointes 16 et 17, 26 et 27 peut consister en une modification de la forme, de la disposition et/ou de la taille de chacune des zones disjointes 16 et 17, 26 et 27 sur la carte 15, 25.

Telle que représentée à la figure 4, cette étape d'adaptation 32 peut être effectuée préalablement à une étape d'information 33 pour informer au moins un pilote de l'aéronef 1 que le niveau d'endommagement de la ou des pièces 2 d'aéronef est supérieur à une première valeur de seuil prédéterminée.

Selon une autre variante non représentée, cette étape d'adaptation 32 peut également être effectuée en parallèle ou postérieurement à une telle étape d'information 33.

Telle que représentée à la figure 5, lorsque le procédé 21 est mis en œuvre dans une station sol 45, cette étape d'adaptation 42 peut être effectuée parallèlement avec une étape de planification 43 apte à planifier une opération de maintenance de l'aéronef 1 et à procéder au remplacement de la ou des pièces 2 d'aéronef lorsque leur niveau d'endommagement est supérieur à une seconde valeur de seuil prédéterminée.

En outre, une telle étape d'adaptation 32, 42 peut notamment permettre de modifier le nombre de zones disjointes 16 et 17, 26 et 27 de la carte 15, 25. L'étape d'adaptation 32, 42 permet de modifier la carte 15, 25 et d'augmenter le nombre de zones disjointes 16 et 17, 26 et 27 quelle comporte si par exemple on souhaite affiner la précision de détermination du niveau d'endommagement des pièces 2 de l'aéronef 1. Le nombre de zones disjointes 16 et 17, 26 et 27 peut également être diminué si par exemple on souhaite simplifier ou accélérer la détermination du niveau d'endommagement des pièces 2 de l'aéronef 1.

De façon avantageuse, un procédé conforme à l'invention peut en outre comporter à la fois une étape d'information 33 pour informer au moins un pilote du aéronef 1 que le niveau d'endommagement de la ou des pièces 2 d'aéronef est supérieur à une première valeur de seuil prédéterminée et une étape de planification 43 apte à planifier une opération de maintenance de l'aéronef 1 et à procéder au remplacement de la ou des pièces 2 d'aéronef lorsque leur niveau d'endommagement est supérieur à une seconde valeur de seuil prédéterminée.

En outre, la première valeur de seuil prédéterminée et la seconde valeur de seuil prédéterminée peuvent être indifféremment égales entre elles ou encore être distinctes l'une de l'autre.

Lorsque ces valeurs de seul prédéterminées sont égales, un pilote peut ainsi être informé en vol qu'une pièce à atteint son niveau d'endommagement nécessitant une opération de maintenance.

Ceci est notamment intéressant pour certaines pièces non critiques et dont le niveau d'endommagement important permet néanmoins au pilote de finir sa mission courante.

Lorsque ces valeurs de seul prédéterminées sont distinctes l'une de l'autre, un pilote peut ainsi être informé en vol que le niveau d'endommagement d'une pièce à atteint la première valeur de seuil prédéterminée. Cette pièce ne doit donc pas être replacée immédiatement cependant le pilote sait alors que le niveau d'endommagement de la pièce se rapproche de la seconde valeur de seuil prédéterminée nécessitant une opération de maintenance.

Ceci est notamment intéressant pour certaines pièces critiques et dont le niveau d'endommagement important ne permettra au pilote de finir sa mission courante.

Par ailleurs, selon une première variante telle que représentée à la figure 6, la carte 15 peut être choisie de type tridimensionnel comportant une forme sphérique à maillage icosaédrique.

Selon une seconde variante telle que représentée à la figure 7, la carte 25 peut également être choisie de type bidimensionnel comportant une forme rectangulaire à maillage hexagonal. Selon une autre variante non représentée, la carte peut également être de type bidimensionnel comportant une forme rectangulaire à maillage rectangulaire.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé (11, 21) de contrôle d'un niveau d'endommagement d'au moins une pièce (2) d'aéronef (1) dans au moins une phase de vol donnée,
**caractérisé en ce que** ledit procédé (11, 21) comporte au moins :
• une étape de collecte (12, 22) pour recevoir des données représentatives de mesures d'au moins un paramètre de vol choisi parmi le groupe comportant une position, une vitesse de déplacement, une accélération et un paramètre environnemental dudit aéronef (1), lesdites données étant générées lors d'une mission dudit aéronef (1) par au moins un capteur (3) embarqué sur ledit aéronef (1), chaque donnée correspondant à un point d'entrée représentatif dudit au moins un paramètre de vol dans un espace multidimensionnel,
• une étape de projection (14, 24) pour projeter selon une méthode déterminée chaque point d'entrée de l'espace multidimensionnel sur une carte (15, 25) préalablement construite pour former un point image (Pi), ladite carte (15, 25) comportant au moins deux zones disjointes (16 et 17, 26 et 27) délimitées par des lignes de contour fermé (116 et 117, 126 et 127), chaque zone (16 et 17, 26 et 27) étant représentative d'une phase de vol dudit aéronef (1) choisie parmi le groupe comportant une phase d'approche, une phase d'atterrissage, une phase en vol stationnaire, une phase d'évolution à basse vitesse, une phase de décollage, une phase en descente, une phase en montée, une phase au sol, une phase de virage, une phase en palier, une phase de virages en point fixe, une phase de ressources, une phase de roulage et une phase de transitions,
• une étape d'identification (18, 28) pour identifier pour chaque point image (Pi) une zone image (Zi) parmi lesdites au moins deux zones disjointes (16 et 17, 26 et 27) dans laquelle se trouve ledit point image (Pi), et
• une étape d'analyse (19, 29) pour dénombrer, pour la pièce considérée et pour la phase de vol considérée, le niveau d'endommagement de la pièce correspondant au produit d'un coefficient prédéterminé associé à ladite phase de vol multiplié par la durée d'utilisation totale de la pièce correspondante à cette même phase de vol, la durée d'utilisation totale de la pièce dans ladite phase de vol étant calculée au préalable, ladite phase de vol correspondant à la zone image (Zi) identifiée parmi lesdites au moins deux zones disjointes (16 et 17, 26 et 27) dans l'étape d'identification.

2. Procédé selon la revendication 1,
**caractérisé en ce que** ladite carte (15, 25) est construite lors d'une phase préalable d'apprentissage selon ladite méthode déterminée au moyen d'un ensemble de données standardisées d'apprentissage.

3. Procédé selon l'une quelconque des revendications 1 à 2,
**caractérisé en ce que** ladite méthode déterminée est une méthode reposant sur une cartographie auto-adaptative de Kohonen.

4. Procédé selon l'une quelconque des revendications 1 à 3,
**caractérisé en ce que** ladite carte (15) est de type tridimensionnel comportant une forme sphérique à maillage icosaédrique.

5. Procédé selon l'une quelconque des revendications 1 à 3, **caractérisé en ce que** ladite carte (25) est de type bidimensionnel comportant une forme rectangulaire à maillage hexagonal.

6. Procédé selon l'une quelconque des revendications 1 à 5,
**caractérisé en ce que** ledit procédé (11, 21) comporte une étape de standardisation (13, 23) pour standardiser lesdites données en générant des données standardisées représentatives desdites mesures dudit au moins un paramètre de vol, lesdites données standardisées correspondant auxdits points d'entrée représentatifs dudit au moins un paramètre de vol dans ledit espace multidimensionnel.

7. Procédé selon la revendication 6,
**caractérisé en ce que** ladite étape de standardisation (13, 23) comporte une sous étape de normalisation (131, 231) desdites données.

8. Procédé selon l'une quelconque des revendications 6 à 7,
**caractérisé en ce que** ladite étape de standardisation (13, 23) comporte une sous étape de sélection (132, 232) desdites données.

9. Procédé selon l'une quelconque des revendications 1 à 8,
**caractérisé en ce que** ladite étape d'analyse (19, 29) comporte une sous étape d'estimation (191, 291) d'une fiabilité de prédiction associée à ladite étape d'identification (18, 28) de ladite zone image (Zi).

10. Procédé selon l'une quelconque des revendications 1 à 9
**caractérisé en ce que** ledit procédé (11, 21) comporte une étape d'enregistrement (30, 40) desdites zones images et une étape de restitution (31, 41) dudit niveau d'endommagement de ladite au moins une pièce (2) d'aéronef.

11. Procédé selon l'une quelconque des revendications 1 à 10,
**caractérisé en ce que** ledit procédé (11, 21) comporte une étape d'adaptation (32, 42) pour transformer lesdites au moins deux zones disjointes (16 et 17, 26 et 27) de ladite carte (15, 25) au cours du temps au moyen desdits points d'entrée.

12. Procédé selon l'une quelconque des revendications 1 à 11,
**caractérisé en ce que**, ledit procédé (11) étant mis en oeuvre dans ledit aéronef (1), ledit procédé (11) comporte une étape de génération d'une d'information (33) pour informer au moins un pilote dudit aéronef (1) que ledit niveau d'endommagement de ladite au moins une pièce (2) d'aéronef est supérieur à une première valeur de seuil prédéterminée.

13. Procédé selon l'une quelconque des revendications 1 à 11,
**caractérisé en ce que**, ledit procédé (21) étant mis en oeuvre au sol dans une station sol (45), ledit procédé (21) comporte une étape de planification (43) pour prévoir une opération de maintenance dudit aéronef (1) permettant un remplacement de ladite au moins une pièce (2) d'aéronef lorsque ledit niveau d'endommagement de ladite au moins une pièce (2) d'aéronef est supérieur à une seconde valeur de seuil prédéterminée.

14. Système (4, 34, 44) de contrôle d'un niveau d'endommagement d'au moins une pièce (2) d'aéronef (1) dans au moins une phase de vol donnée,
**caractérisé en ce que** ledit système (4, 34, 44) comporte :
• une interface de connexion (5) configurée pour recevoir des données représentatives de mesures d'au moins un paramètre de vol choisi parmi le groupe comportant une position, une vitesse de déplacement, une accélération et un paramètre environnemental dudit aéronef (1), lesdites données étant générées lors d'une mission dudit aéronef (1) par au moins un capteur (3) embarqué sur ledit aéronef (1) puis recueillies par ladite interface de connexion (5), chaque donnée correspondant à un point d'entrée représentatif dudit au moins un paramètre de vol dans un espace multidimensionnel,
• des moyens de traitement (7) configurés pour projeter selon une méthode déterminée chaque point d'entrée de l'espace multidimensionnel sur une carte (15, 25) préalablement construite pour former un point image (Pi), ladite carte (15, 25) comportant au moins deux zones disjointes (16 et 17, 26 et 27) délimitées par des lignes de contour fermé (116 et 117, 126 et 127), chaque zone (16 et 17, 26 et 27) étant représentative d'une phase de vol dudit aéronef (1) choisie parmi le groupe comportant une phase d'approche, une phase d'atterrissage, une phase en vol stationnaire, une phase d'évolution à basse vitesse, une phase de décollage, une phase en descente, une phase en montée, une phase au sol, une phase de virage, une phase en palier, une phase de virages en point fixe, une phase de ressources, une phase de roulage et une phase de transitions,
• des moyens d'identification (8) configurés pour identifier pour chaque point image (Pi) une zone image (Zi) parmi lesdites au moins deux zones disjointes (16 et 17, 26 et 27),
• des moyens d'analyse (9) configurés pour dénombrer, pour la pièce considérée et pour la phase de vole considérée, le niveau d'endommagement de la pièce correspondant au produit d'un coefficient prédéterminé associé à ladite phase de vol multiplié par la durée d'utilisation totale de la pièce correspondante à cette même phase de vol, la durée d'utilisation totale de la pièce dans ladite phase de vol étant calculée au préalable, ladite phase de vol correspondant à la zone image (Zi) identifiée parmi lesdites au moins deux zones disjointes (16 et 17, 26 et 27) dans l'étape d'identification .

15. Aéronef (1) comportant au moins une pièce (2) d'aéronef présentant un niveau d'endommagement évoluant au cours du temps en fonction d'une utilisation dudit aéronef (1),
**caractérisé en ce que** ledit aéronef (1) comporte un système (34) de contrôle d'un niveau d'endommagement de ladite au moins une pièce (2) d'aéronef selon la revendication 14.

16. Aéronef selon la revendication 15,
**caractérisé en ce que** ledit système de contrôle (34) comporte au moins un organe d'information (10) configuré pour informer au moins un pilote dudit aéronef (1) que ledit niveau d'endommagement de ladite au moins une pièce (2) d'aéronef est supérieur à une première valeur de seuil prédéterminée.

## Patentansprüche

1. Verfahren (11, 21) zur Überwachung eines Grades der Schädigung von mindestens einem Teil (2) eines Luftfahrzeugs (1) in mindestens einer gegebenen Flugphase,
**dadurch gekennzeichnet, dass** das Verfahren (11, 21) mindestens umfasst:
• einen Sammelschritt (12, 22) zum Empfangen von Daten, die repräsentativ für Messungen mindestens eines Flugparameters sind, der aus der Gruppe ausgewählt ist, die eine Position, eine Reisegeschwindigkeit, eine Beschleunigung und einen Umgebungsparameter des Luftfahrzeugs (1) umfasst, wobei die Daten während einer Mission des Luftfahrzeugs (1) durch mindestens einen Sensor (3) an Bord des Luftfahrzeugs (1) erzeugt werden, wobei jeder Datenwert einem für den mindestens einen Flugparameter in einem mehrdimensionalen Raum repräsentativen Anfangspunkt entspricht,
• einen Projektionsschritt (14, 24) zum Projizieren jedes Anfangspunkts des mehrdimensionalen Raums nach einer bestimmten Methode auf eine zuvor konstruierte Karte (15, 25), um einen Bildpunkt (Pi) zu bilden, wobei die Karte (15, 25) mindestens zwei durch geschlossene Konturlinien (116 und 117, 126 und 127) begrenzte disjunkte Bereiche (16 und 17, 26 und 27) umfasst, wobei jeder Bereich (16 und 17, 26 und 27) repräsentativ ist für eine Flugphase des Luftfahrzeugs (1), die aus der Gruppe ausgewählt ist, die eine Anflugphase, eine Landephase, eine Schwebephase, eine Phase der Bewegung bei niedriger Geschwindigkeit, eine Startphase, eine Sinkphase, eine Steigphase, eine Bodenphase, eine Kurvenphase, eine Plateauphase, eine Festpunktkurvenphase, eine Ressourcenphase, eine Rollphase und eine Übergangsphase umfasst,
• einen Identifikationsschritt (18, 28) zum Identifizieren, für jeden Bildpunkt (Pi), eines Bildbereichs (Zi) unter den mindestens zwei disjunkten Bereichen (16 und 17, 26 und 27), in dem sich der Bildpunkt (Pi) befindet, und
• einen Analyseschritt (19, 29) zum Ermitteln, für das betrachtete Teil und für die betrachtete Flugphase, des Grades der Schädigung des Teils, der dem Produkt eines vorgegebenen, mit der Flugphase verknüpften Koeffizienten, multipliziert mit der dieser gleichen Flugphase entsprechenden Gesamtnutzungsdauer des Teils, entspricht, wobei die Gesamtnutzungsdauer des Teils in der Flugphase im Voraus berechnet wird, wobei die Flugphase dem unter den mindestens zwei disjunkten Bereichen (16 und 17, 26 und 27) im Identifikationsschritt identifizierten Bildbereich (Zi) entspricht.

2. Verfahren nach Anspruch 1,
**dadurch gekennzeichnet, dass** die Karte (15, 25) in einer vorhergehenden Lernphase nach der bestimmten Methode anhand eines standardisierten Lerndatensatzes konstruiert wird.

3. Verfahren nach einem der Ansprüche 1 bis 2,
**dadurch gekennzeichnet, dass** die bestimmte Methode eine auf einer selbstlernenden Kohonen-Kartographie basierende Methode ist.

4. Verfahren nach einem der Ansprüche 1 bis 3,
**dadurch gekennzeichnet, dass** die Karte (15) vom dreidimensionalen Typ ist und eine Kugelform mit einem ikosaedrischen Netz aufweist.

5. Verfahren nach einem der Ansprüche 1 bis 3,
**dadurch gekennzeichnet, dass** die Karte (25) vom zweidimensionalen Typ ist und eine rechteckige Form mit einem hexagonalen Netz aufweist.

6. Verfahren nach einem der Ansprüche 1 bis 5,
**dadurch gekennzeichnet, dass** das Verfahren (11, 21) einen Standardisierungsschritt (13, 23) zum Standardisieren der Daten durch Erzeugen von für die Messungen des mindestens einen Flugparameters repräsentativen standardisierten Daten umfasst, wobei die standardisierten Daten den für den mindestens einen Flugparameter repräsentativen Anfangspunkten in dem mehrdimensionalen Raum entsprechen.

7. Verfahren nach Anspruch 6,
**dadurch gekennzeichnet, dass** der Standardisierungsschritt (13, 23) einen Unterschritt des Normierens (131, 231) der Daten umfasst.

8. Verfahren nach einem der Ansprüche 6 bis 7,
**dadurch gekennzeichnet, dass** der Standardisierungsschritt (13, 23) einen Unterschritt des Auswählens (132, 232) der Daten umfasst.

9. Verfahren nach einem der Ansprüche 1 bis 8,
**dadurch gekennzeichnet, dass** der Analyseschritt (19, 29) einen Unterschritt des Schätzens (191, 291) einer Vorhersagezuverlässigkeit umfasst, die mit dem Schritt des Identifizierens (18, 28) des Bildbereichs (Zi) verknüpft ist.

10. Verfahren nach einem der Ansprüche 1 bis 9,
**dadurch gekennzeichnet, dass** das Verfahren (11, 21) einen Schritt des Aufzeichnens (30, 40) der Bildbereiche und einen Schritt des Wiedergebens (31, 41) des Grades der Schädigung des mindestens einen Teils (2) des Luftfahrzeugs umfasst.

11. Verfahren nach einem der Ansprüche 1 bis 10,
**dadurch gekennzeichnet, dass** das Verfahren (11, 21) einen Anpassungsschritt (32, 42) umfasst, um die mindestens zwei disjunkten Bereiche (16 und 17, 26 und 27) der Karte (15, 25) im Laufe der Zeit mittels der Anfangspunkte zu transformieren.

12. Verfahren nach einem der Ansprüche 1 bis 11,
**dadurch gekennzeichnet, dass**, wenn das Verfahren (11) in dem Luftfahrzeug (1) durchgeführt wird, das Verfahren (11) einen Schritt des Erzeugens einer Information (33) umfasst, um mindestens einen Piloten des Luftfahrzeugs (1) darüber zu informieren, dass der Grad der Schädigung des mindestens einen Luftfahrzeugteils (2) über einem ersten vorgegebenen Schwellenwert liegt.

13. Verfahren nach einem der Ansprüche 1 bis 11,
**dadurch gekennzeichnet, dass**, wenn das Verfahren (21) am Boden in einer Bodenstation (45) durchgeführt wird, das Verfahren (21) einen Planungsschritt (43) umfasst, um einen Wartungsvorgang des Luftfahrzeugs (1) vorzusehen, der einen Austausch des mindestens einen Luftfahrzeugteils (2) ermöglicht, wenn der Grad der Schädigung des mindestens einen Luftfahrzeugteils (2) über einem zweiten vorgegebenen Schwellenwert liegt.

14. System (4, 34, 44) zum Überwachen eines Grades der Schädigung mindestens eines Teils (2) eines Luftfahrzeugs (1) in mindestens einer gegebenen Flugphase,
**dadurch gekennzeichnet, dass** das System (4, 34, 44) umfasst:
• eine Verbindungsschnittstelle (5), die konfiguriert ist, um Daten zu empfangen, die repräsentativ für Messungen mindestens eines Flugparameters sind, der aus der Gruppe ausgewählt ist, die eine Position, eine Reisegeschwindigkeit, eine Beschleunigung und einen Umgebungsparameter des Luftfahrzeugs (1) umfasst, wobei die Daten während einer Mission des Luftfahrzeugs (1) von mindestens einem Sensor (3) an Bord des Luftfahrzeugs (1) erzeugt und dann von der Verbindungsschnittstelle (5) gesammelt werden, wobei jeder Datenwert einem für den mindestens einen Flugparameter repräsentativen Anfangspunkt in einem mehrdimensionalen Raum entspricht,
• Verarbeitungsmittel (7), die konfiguriert sind, um nach einer bestimmten Methode jeden Anfangspunkt des mehrdimensionalen Raums auf eine zuvor konstruierte Karte (15, 25) zu projizieren, um einen Bildpunkt (Pi) zu bilden, wobei die Karte (15, 25) mindestens zwei durch geschlossene Konturlinien (116 und 117, 126 und 127) begrenzte disjunkte Bereiche (16 und 17, 26 und 27) umfasst, wobei jeder Bereich (16 und 17, 26 und 27) repräsentativ für eine Flugphase des Luftfahrzeugs (1) ist, die aus der Gruppe ausgewählt ist, die eine Anflugphase, eine Landephase, eine Schwebephase, eine Phase der Bewegung bei niedriger Geschwindigkeit, eine Startphase, eine Sinkphase, eine Steigphase, eine Bodenphase, eine Kurvenphase, eine Plateauphase, eine Festpunktkurvenphase, eine Ressourcenphase, eine Rollphase und eine Übergangsphase umfasst,
• Identifikationsmittel (8), die konfiguriert sind, um für jeden Bildpunkt (Pi) einen Bildbereich (Zi) unter den mindestens zwei disjunkten Bereichen (16 und 17, 26 und 27) zu identifizieren,
• Analysemittel (9), die konfiguriert sind, um für das betrachtete Teil und für die betrachtete Flugphase den Grad der Schädigung des Teils zu ermitteln, der dem Produkt eines mit der Flugphase verbundenen vorgegebenen Koeffizienten, multipliziert mit der dieser gleichen Flugphase entsprechenden Gesamtnutzungsdauer des Teils, entspricht, wobei die Gesamtnutzungsdauer des Teils in der Flugphase im Voraus berechnet wird, wobei die Flugphase dem unter den mindestens zwei disjunkten Bereichen (16 und 17, 26 und 27) im Identifikationsschritt identifizierten Bildbereich (Zi) entspricht.

15. Luftfahrzeug (1) mit mindestens einem Luftfahrzeugteil (2), das einen sich im Laufe der Zeit in Abhängigkeit von einer Nutzung des Luftfahrzeugs (1) verändernden Schädigungsgrad aufweist,
**dadurch gekennzeichnet, dass** das Luftfahrzeug (1) ein System (34) zur Überwachung eines Schädigungsgrades des mindestens einen Luftfahrzeugteils (2) nach Anspruch 14 umfasst.

16. Luftfahrzeug nach Anspruch 15,
**dadurch gekennzeichnet, dass** das Überwachungssystem (34) mindestens eine Informationseinrichtung (10) umfasst, die konfiguriert ist, um mindestens einen Piloten des Luftfahrzeugs (1) darüber zu informieren, dass der Grad der Schädigung des mindestens einen Luftfahrzeugteils (2) über einem ersten vorgegebenen Schwellenwert liegt.

## Claims

1. A method (11, 21) for checking a level of damage of at least one part (2) of an aircraft (1) in at least one flight phase,
**characterized in that** the method (11, 21) comprises at least:
• a collection step (12, 22) for receiving data representative of measurements of at least one flight parameter chosen from the group comprising a position, a travel speed, an acceleration and an environmental parameter of the aircraft (1), the data being generated during a mission of the aircraft (1) by at least one sensor (3) embedded on the aircraft (1), each piece of data corresponding to an entry point representative of the at least one flight parameter in a multidimensional space;
• a projection step (14, 24) for projecting, according to a determined process, each entry point of the multidimensional space onto a previously constructed map (15, 25) in order to form an image point (Pi), the map (15, 25) comprising at least two separate zones (16 and 17, 26 and 27) defined by closed contour lines (116 and 117, 126 and 127), each zone (16 and 17, 26 and 27) being representative of a flight phase of the aircraft (1) chosen from the group comprising an approach phase, a landing phase, a hovering flight phase, a low-speed maneuvering phase, a take-off phase, a descent phase, a climbing phase, a ground phase, a turning phase, a level flight phase, a fixed-point turning phase, a recovery phase, a taxiing phase and a transition phase;
• an identification step (18, 28) for identifying, for each image point (Pi) an image zone (Zi) from the at least two separate zones (16 and 17, 26 and 27) in which the image point (Pi) is located; and
• an analysis step (19, 29) for counting, for the part considered and for the flight phase considered, the level of damage to the part corresponding to the product of a predetermined coefficient associated with the flight phase multiplied by the total duration of use of the part corresponding to this same flight phase, the total duration of use of the part in the flight phase being calculated beforehand, the flight phase corresponding to the image zone (Zi) identified among the at least two separate zones (16 and 17, 26 and 27) in the identification step.

2. The method according to claim 1,
**characterized in that** the map (15, 25) is constructed during a preliminary learning phase according to the determined process using a standardized set of learning data.

3. The method according to claim 1 or claim 2,
**characterized in that** the determined process is a process based on Kohonen self-organizing mapping.

4. The method according to any one of claims 1 to 3,
**characterized in that** the map (15) is a three-dimensional map comprising a spherical shape with an icosahedral mesh.

5. The method according to any one of claims 1 to 3,
**characterized in that** the map (25) is a two-dimensional map comprising a rectangular shape with a hexagonal mesh.

6. The method according to any one of claims 1 to 5,
**characterized in that** the method (11, 21) comprises a standardization step (13, 23) in order to standardize the data by generating standardized data representative of the measurements of the at least one flight parameter, the standardized data corresponding to the entry points representative of the at least one flight parameter in the multidimensional space.

7. The method according to claim 6,
**characterized in that** the standardization step (13, 23) comprises a sub-step of normalizing (131, 231) the data.

8. The method according to claim 6 or claim 7,
**characterized in that** the standardization step (13, 23) comprises a sub-step of selecting (132, 232) the data.

9. The method according to any one of claims 1 to 8,
**characterized in that** the analysis step (19, 29) comprises a sub-step of estimating (191, 291) a prediction reliability associated with the step of identifying (18, 28) the image zone (Zi) .

10. The method according to any one of claims 1 to 9,
**characterized in that** the method (11, 21) comprises a step of recording (30, 40) the image zones and a step of plotting (31, 41) the level of damage of the at least one aircraft part (2).

11. The method according to any one of claims 1 to 10,
**characterized in that** the method (11, 21) comprises an adaptation step (32, 42) for processing the at least two separate zones (16 and 17, 26 and 27) of the map (15, 25) over time using the entry points.

12. The method according to any one of claims 1 to 11,
**characterized in that** when the method (11) is implemented in the aircraft (1), the method (11) comprises a step of generating a piece of information (33) in order to inform at least a pilot of the aircraft (1) that the level of damage of the at least one aircraft part (2) is greater than a first predetermined threshold value.

13. The method according to any one of claims 1 to 11,
**characterized in that** when the method (21) is implemented on the ground in a ground station (45), the method (21) comprises a scheduling step (43) in order to schedule a maintenance operation for the aircraft (1) so as to replace the at least one aircraft part (2) when the level of damage of the at least one aircraft part (2) is greater than a second predetermined threshold value.

14. A system (4, 34, 44) for checking a level of damage of at least one part (2) of an aircraft (1) in at least one flight phase,
**characterized in that** the system (4, 34, 44) comprises:
• a connection interface (5) configured to receive data representative of measurements of at least one flight parameter chosen from the group comprising a position, a travel speed, an acceleration and an environmental parameter of the aircraft (1), the data being generated during a mission of the aircraft (1) by at least one sensor (3) embedded on the aircraft (1) then collected by the connection interface (5), each piece of data corresponding to an entry point representative of the at least one flight parameter in a multidimensional space;
• processing means (7) configured to project, according to a determined process, each entry point of the multidimensional space onto a previously constructed map (15, 25) in order to form an image point (Pi), the map (15, 25) comprising at least two separate zones (16 and 17, 26 and 27) defined by closed contour lines (116 and 117, 126, 127), each zone (16 and 17, 26 and 27) being representative of a flight phase of the aircraft (1) chosen from the group comprising an approach phase, a landing phase, a hovering flight phase, a low-speed maneuvering phase, a take-off phase, a descent phase, a climbing phase, a ground phase, a turning phase, a level flight phase, a fixed-point turning phase, a recovery phase, a taxiing phase and a transition phase;
• identification means (8) configured to identify, for each image point (Pi), an image zone (Zi) from the at least two separate zones (16 and 17, 26 and 27);
• analysis means (9) configured to count, for the part considered and for the flight phase considered, the level of damage to the part corresponding to the product of a predetermined coefficient associated with the flight phase multiplied by the total duration of use of the part corresponding to this same flight phase, the total duration of use of the part in the flight phase being calculated beforehand, the flight phase corresponding to the image zone (Zi) identified among the at least two separate zones (16 and 17, 26 and 27) in the identification step.

15. An aircraft (1) comprising at least one aircraft part (2) having a level of damage that changes over time depending on the use of the aircraft (1),
**characterized in that** the aircraft (1) comprises a system (34) for checking a level of damage of the at least one aircraft part (2) according to claim 14.

16. The aircraft according to claim 15,
**characterized in that** the checking system (34) comprises at least one information source (10) configured to inform at least a pilot of the aircraft (1) that the level of damage of the at least one aircraft part (2) is greater than a first predetermined threshold value.
